# EUROPEAN PATENT SPECIFICATION

(11) **EP 0 652 284 B1**
(45) Date of publication and mention of the grant of the patent: **26.04.2000**
(21) Application number: 94402235.9
(22) Date of filing: 05.10.1994
(51) Int. Cl.: C12H 1/22, C12G 3/06, C12C 5/02

(54) **Preparation of beer**
Herstellung von Bier
Préparation de la bière

(30) Priority: 06.10.1993 US 132748
(43) Date of publication of application: 10.05.1995
(73) Proprietor: BOSTON BEER COMPANY LIMITED PARTNERSHIP, Boston, Massachusetts 02130 (US)
(72) Inventor: Koch, Charles James, Newton, Massachusetts 02158 (US)
(74) Representative: Dubois-Chabert, Guy

(56) References cited:
- EP-A- 0 138 356
- EP-A- 0 229 530
- WO-A-91/02048
- CA-A- 1 097 577
- DE-A- 3 217 011
- GB-A- 5 042
- GB-A- 500 081
- GB-A- 2 206 065
- US-A- 3 386 832
- JOURNAL OF THE INSTITUTE OF BREWING, vol. 98, no. 4, July 1992 - August 1992 LONDON GB, pages 339-343, A.C. OGBONNA & S.K.C. OBI 'Use of raphia palmwine yeast strains in sorghum beer brewing.'
- DATABASE WPI Section Ch, Week 9343 Derwent Publications Ltd., London, GB; Class D16, AN 93-338903 & JP-A-05 244 924 (KIRIN BREWERY KK) , 24 September 1993
- FOOD ENGINEERING INTERNATIONAL, vol. 6, no. 9, September 1981 page 19 ANON 'Tasty beer.'

## Description

This invention relates generally to the preparation of malt beverages, and more particularly to the preparation of high alcohol beer having a full, round flavor.

In the production of beer, Brewers' yeast is used to ferment into ethyl alcohol a substrate made of a mixture of fermentable carbohydrates so called "wort carbohydrates." The wort carbohydrates involved which can be fermented by Brewers' yeast are normally maltose, glucose, maltotriose and traces of sucrose and fructose. They are obtained by allowing malt enzymes (alpha and beta amylase) to transform starch molecules from malt and other adjuncts into the fermentable sugars outlined above. This is accomplished during the so-called mashing operation.

Conventional mashing involves mixing together of malt and cereal adjuncts in hot water, followed by a series of heating and resting cycles. Substances which are solubilized in the hot water are collectively called the extract. Following mashing, the soluble materials are extracted in a lauter tub, leaving behind the spent grain. A clear liquid (wort) obtained by the extraction may then be transferred to a brew kettle and boiled for a period of time (kettle boiled) which inactivates the malt enzymes. Wort compositions vary depending on the raw materials and mash cycle employed.

A typical wort used in brewing may comprise the mixed extract of a barley malt mash and a cereal adjuncts mash (typically corn grits or rice). Such mixed extract may be obtained by treating a kiln dried barley malt with warm water, e.g. at about 50°C., in one vessel, the so-called "mash tub", and boiling the cereal adjuncts, (e.g. corn grits or rice in another vessel, the so-called "cooker" and then adding the boiling contents of the cooker to the warm malt suspension in the mash tub. This serves to raise the temperature of the mash tub contents typically to about 57°-67°C. During the rise from 50°C to about 67°C, and starting at around 63°C, the enzymes in the malt and in particular beta-amylase which is most active between 60° and 70°C, partially degrade the starches in both the malt itself and in the corn grits or rice to form simple fermentation sugars, primarily glucose, fructose and maltose. These simple sugars are fairly sweet tasting, and also are fermentable by Brewers' yeast to alcohol and carbon dioxide.

The combined mash is then filtered in a lauter tub, mash filter or other means and the resulting wort boiled with hops, filtered, cooled and fermented with yeast, and carbonated to produce a beer or ale.

Conventional beer, i.e. produced by the above-described process, has an alcohol content of about 4-5% by vol. Recently, there has been an increased consumer interest in beer having a somewhat higher alcohol content. Traditionally, higher alcohol beers have been produced by a so-called "freeze concentration" process which involves subjecting a conventionally produced beer to freezing temperatures under controlled conditions whereby a portion of the water content is changed to ice, and removed. However, freezing the beer, and removing a portion of the water results in a beer having a higher potential for increased turbidity, haze or cloudiness, harsh flavor and a viscous mouth-feel which is considered to be unpalatable by many consumers ("unbalanced" beer). Thus, freeze concentrated beers or so-called "ice bock" beer have achieved little consumer acceptance.

It is thus a primary object of the present invention to provide a new and improved process for production of beer which overcomes the aforesaid and other disadvantages of the prior art. Another object of the present invention is to provide a new and improved process for producing a beer of higher alcohol content as compared to conventional beer. A specific object of the present invention is to provide a smooth, round flavored beer having a higher alcohol content as compared to conventional beer.

These and other objects of the present invention are achieved by employing in the fermentation step a yeast tolerant to high percent of alcohol (e.g. champagne, wine, distiller yeast) in place of a conventional Brewers' yeast, and including in the wort added quantities of simple fermentable sugars such as maple syrup or concentrated brewers wort or maltose. Unlike Brewers' yeast which exhibits sensitivity to alcohol and become deactivated or poisoned by alcohol levels of more than about 7% by vol., champagne, wine or distiller yeasts permit fermentation to continue to an alcohol level of 9-16% by vol., or more, provided there is enough "food", i.e. simple sugar in the brew. There results a high alcohol beer characterized by a typical beer color and mouth-feel, and a smooth, round flavor.

If desired, the resulting product may be freeze concentrated to produce an even higher alcohol content beer. However, since the product starts with a higher alcohol content, significantly less water need be removed to achieve a high alcohol content. As a result, the potential for increased turbidity, haze or cloudiness, viscous mouth-feel and harsh taste characteristics of conventional freeze concentrated beers are greatly reduced.

If desired, the resulting beer may then be aged in used whiskey or wine wooden casks to further round or smooth the flavor.

The basic procedure was to suspend dried, ground barley malt in water, heat the resulting suspension to a specific conversion temperature profile. The mash is then transferred to a filtering vessel or lauter tun. The clear liquid which drains from the mash and the hot water used to wash the adhering sugars from the cereal grains are fed into the kettle.

Then additional simple sugars such as maple syrup or concentrated brewers wort or maltose are heated and converted to a separate vessel (kettle). Both liquids as so-called wort are then mixed together. Hops are added while the mixture is brought to a boil. Boiling is maintained for a period of time.

The liquid is again strained, cooled and inoculated with pitching yeast and allowed to ferment. The ferment liquid is then filtered and if desired freeze concentrated to further raise the alcoholic content of the fermented liquid.

The present invention employs a champagne, wine or distiller yeast and a wort rich in simple sugars. There are several commercially available wine or champagne yeasts which may advantageously be employed in accordance with the present invention amongst which are mentioned EC-1118 or Pirse de Mousse, K1(V-1116), 71B(1122) and Wädenswil 27 avaible from Vinquiny of Heldsbourg, California, U.S.A., or Redstar Yeast and Product, a division of Universal Foods of Milwaukee, Wisconsin, U.S.A.. The yeast should be added at a rate of about 500 - 850 grams of pressed yeast per 100 liters of wort, preferably about 600 - 800 grams of pressed yeast per 100 liters of wort. This differs substantially from the normal pitching rate which is about 170 grams pressed (wet) yeast to 100 liters of wort when using a conventional Brewers'yeast. Also, in order to provide sufficient yeast food, the wort should include sufficient, e.g. 12 kilograms per 100 liters of simple sugars such as maple syrup or concentrated brewers wort or maltose.

The resulting beer is characterized by a similar color, flavor and mouth feel of conventionally fermented beer, but with a natural alcohol content of 15 - 16.5%-by vol. which may be further increased by freeze concentration, i.e. to remove up to 25% of the water.

In another and particularly preferred embodiment of the invention, the resulting beer is aged in used whiskey or wine wooden casks or barrels for 60 to 90 days at 3,3°C (38°F). While it once was a common practice to age beer in wooden casks, this practice has been replaced largely by aging in glass-lined, stainless steel tanks due to the high costs of high quality cooperage, and the extra costs of increased labor and evaporative losses inherent in aging in wooden casks. However, it has been found that aging the beer in used whiskey or wine barrels results in a beer having a fuller and rounder flavor. The reason why aging in used whiskey or wine wooden casks improves the flavor is not fully understood at this time. It is believed, however, that at least some soluble whiskey or wine esters absorbed in the wood may be redissolved out of the wood, and taken up by the beer. Aging the beer in new wooden barrels does not produce comparable results.

The present invention will be further described in the following working procedures.

### PROCEDURE NO. 1

341 kilograms of ground barley malt were added to 8 barrels of water and heated to 50°C (122°F) with stirring in a mash mixer. The resulting malt mash was held at 50°C (122°F) for 20 min. Temperature was raised to 67,2°C (153°F) and held there for 30 min. while stirring, then heated to 76,7°C (170°F). and transferred to the lauter tun. A clear liquid drained from the mash, and hot water used to wash the adhering liquid from the grain were run into the brew kettle.

Concurrently, 273 kilograms of concentrated brewers wort (CBW) and 277 kilograms of maple syrup were added to 3.5 barrels of water in another kettle while stirring and heated to 57,2°C (135°F); then 15 kilograms of GLOCZYME™ 12, available from Amano Enzyme U.S.A. Co., were added, let work for 30 min., heated up to boil, then transferred to the brew kettle and mixed with the main wort obtained from the barley malt. The mix was boiled for 90 min. 2.3 kilograms of hop and 15 kilograms of yeast nutrient (YEASTEX™) available from Siebel Institute were added during the boiling period.

The resulting liquid was again strained, cooled to about 18,3°C (65°F). and transferred to a fermentation tank, to which was added 6 kilograms of EC 1118 dry yeast (champagne yeast) available from Scott Laboratories, Petaloma, California, U.S.A. The resulting mixture was allowed to ferment for 10 days after the yeast settled out, and after filtration, the resulting beer was aged for 60-90 days at 38°C. in used whiskey wooden barrels.

The resulting beer had a dark amber appearance, a measured alcohol content of 16.1 and a full, round flavor.

### PROCEDURE NO. 2

The procedure No. 1 was repeated. However, instead of one yeast strain, two strains were used. That is: SAMUEL ADAMS ALE™ yeast (Boston Beer Company) was pitched first, fermented for 5-7 days, then settled out, separated from the beer. Since this ale yeast is not resistant to high concentrations of alcohol, a high proportion of the fermentable sugars remained in the beer, which was fermented down in 7 days by repitching it with champagne yeast. The resulting beer had the same characteristic of the previous one, but it was fruitier.

In a blind taste test, all the tasters characterized the beer aged in wooden barrels as having a fuller, rounder flavor.

## Claims

1. A method of producing a fermented barley malt, beer flavored beverage, comprising the following steps :
- preparing a mash from barley malt ;
- blending this mash with other sources of fermentable sugars ;
- boiling the mixture with hops ;
- straining, cooling and inoculating the obtained liquid with wine, champagne, or distiller yeast ;
- fermentation ; - aging the beverage after fermentation in used whiskey or wine barrels.

2. A method according to claim 1, wherein said fermentable sugars are selected from the group consisting of maple syrup, concentrated brewers wort and maltose.

3. A method according to claim 1 or 2, wherein said beverage is aged for from 60 to 90 days at 3,3°C (38°F).

4. A fermented barley malt, beer flavored beverage obtainable by the method of claim 1.

## Patentansprüche

1. Verfahren zum Herstellen eines Getränkes aus fermentiertem Gerstenmalz mit Biergeschmack, das die folgenden Schritte umfaßt:
- Herstellen einer Maische aus Gerstenmalz;
- Vermischen dieser Maische mit anderen Quellen vergärbarer Zucker;
- Kochen des Gemischs mit Hopfens;
- Sieben, Kühlen und Impfen der entstandenen Flüssigkeit mit Wein-, Sekt- oder Brandwein, Hefe;
- Vergären;
- Lagern nach der Gehrung in gebrauchten Whisky oder Weinfässern.

2. Verfahren nach Anspruch 1, wobei die vergärbaren Zucker aus der Gruppe ausgewählt werden, die aus Ahornsirup, konzentrierter Bierwürze und Maltose besteht.

3. Verfahren nach Anspruch 1 oder 2, wobei das Getränk zwischen 60 und 90 Tagen bei 3,3°C (38°F) gelagert wird.

4. Getränk mit Biergeschmack aus vergorenem Gerstenmalz, das mit dem Verfahren nach Anspruch 1 hergestellt werden kann.

## Revendications

1. Procédé de préparation d'une boisson au goût de bière, au malt d'orge fermenté, comprenant les étapes suivantes :
- préparer une 〈〈 salade 〉〉 (〈〈 mash 〉〉) a partir du malt d'orge ;
- mélanger cette 〈〈 salade 〉〉 avec d'autres sources de sucres fermentescibles ;
- faire bouillir ce mélange avec du houblon ;
- filtrer, refroidir le liquide obtenu, et lui inoculer de la levure pour la vinification, la champagnisation, ou de la levure de distillerie ;
- fermenter ;
- faire vieillir la boisson après fermentation dans des fûts a whisky ou à vin déjà utilisés.

2. Procédé selon la revendication 1, dans lequel lesdits sucres fermentescibles sont choisis dans le groupe composé du sirop d'érable, du moût de bière concentré et du maltose.

3. Procédé selon la revendication 1 ou 2, dans lequel on fait vieillir ladite boisson pendant de 60 a 90 jours à 3,3°C (38°F).

4. Boisson au goût de bière contenant du malt d'orge fermenté susceptible d'être obtenue par le procédé de la revendication 1.
